# EUROPEAN PATENT APPLICATION

(11) **EP 2 777 989 A1**
(43) Date of publication of application: **17.09.2014**
(21) Application number: 14000905.1
(22) Date of filing: 13.03.2014
(51) Int. Cl.: B60R 9/10

(54) **Powered bicycle racking system**

(30) Priority: 15.03.2013 US 201361792107 P; 25.10.2013 US 201361895628 P
(71) Applicant: Magna Closures Inc., Newmarket, ON L3Y 4X7 (CA)
(72) Inventor: Schatz, Kurt, Ontario, L9P 1R4 (CA); Boin, Luciano, Ontario, L4C 5R5 (CA); Sabatini, Gabriele, Ontario, L4P 3Y1 (CA); Miu, Traian, Oakville, Ontario L6L 6W8 (CA); Groszkowski, Krzysztof, Newmarket, Ontario L3X 2Z9 (CA)
(74) Representative: Hössle Patentanwälte Partnerschaft

(57) **Abstract**

A powered bicycle racking system is disclosed for use with a motor vehicle and which is configured to be concealed within or beneath a rear bumper area of the motor vehicle. The system includes a power-operated presenter unit that can be controlled to move a folding bicycle attachment assembly that is mounted to a mounting structure between retracted and extended position. In the retracted position, the bicycle attachment assembly is folded and concealed within the bumper. In the extended position, the bicycle attachment assembly can be unfolded for mounting a bicycle thereto.

## Description

### CROSS REFERENCE TO RELATED APPLICATIONS

This application claims priority to and the benefit of US Provisional Application No. 61/792,107 filed March 15, 2013 and US Provisional Application No. 61/895,628 filed October 25, 2013. The entire disclosure of each of the above applications is incorporated herein by reference.

### FIELD

The present disclosure relates generally to bicycle carriers for motor vehicles and, more particularly, to a powered bicycle racking system capable of being integrated into a rear portion of a motor vehicle and which is operable to move a foldable bicycle attachment assembly between retracted and extended positions.

### BACKGROUND

This section provides background information related to the present disclosure which is not necessarily prior art.

In view of the enormous popularity of bicycles for leisure, exercise and sporting activities, a need exists to transport bicycles using motor vehicles. Conventional bicycle carriers are often used to mount one or more bicycles to the roof or rear trunk portion of motor vehicles. Such aftermarket bicycle racks suffer from several problems including that they are heavy, cumbersome to install and can cause paint and/or body damage to the vehicle.

To address these problems, bicycle carriers have been developed that can be stored in a more compact manner within or below the rear trunk portion of the vehicle. Specifically, some "retractable" bicycle carriers have been developed that can be integrated into the rear bumper system of the motor vehicle. Examples of such vehicle integrated retractable bicycle carriers are disclosed in U.S. Patent 7,121,597; 7,806,307; 7,909,213; and 8,191,942. While these retractable bicycle carrier systems provide enhanced convenience over traditional vehicle-mounted bicycle carriers, a need remains to continue development of advanced bicycle racking systems to meet the needs of bicycle enthusiasts and travelers.

### SUMMARY

This section provides a general summary of the present disclosure and is not intended to be a comprehensive disclosure of all of its features, advantages and its full scope of applicability.

It is an aspect of the present disclosure to provide a powered bicycle racking system for use with a motor vehicle having a power-operator presenter unit capable of moving a folding bicycle attachment assembly between a retracted position and an extended position. The folding bicycle attachment assembly includes a plurality of bicycle support components that can be moved from a folded and concealed orientation to an unfolded and exposed orientation when the bicycle attachment assembly is located in its extended position to facilitate mounting of a bicycle thereto. Upon release of the bicycle from the bicycle attachment assembly, its support components can be returned to the folded and concealed orientation prior to the power-operated presenter unit moving the bicycle attachment assembly to its retracted position.

It is another aspect of the present disclosure to integrate the powered bicycle racking system into a rear bumper area of a motor vehicle. The presenter unit and the folding bicycle attachment assembly are concealed within the rear bumper area of the vehicle when the system is retracted.

It is another aspect of the present disclosure to provide a powered bicycle racking system having a power-operated leadscrew assembly for moving the bicycle attachment assembly between its retracted and extended position relative to the motor vehicle. The power-operated leadscrew assembly includes an electric motor driving a leadscrew and a tube assembly that is axially moveable in response to rotation of the leadscrew between retracted and extended position. A mounting structure is fixed for movement with the tube assembly and is configured to accept attachment of the bicycle attachment assembly thereto. The mounting structure is further adapted to be attached to a central cover portion of the rear bumper for moving the cover portion between retracted and extended positions relative to the remainder of the rear bumper.

It is yet another aspect of the present disclosure to provide the folding bicycle attachment assembly with front and rear wheel support trays and an adjustable frame support that cooperate to releasably mount a bicycle to the mounting structure of the powered bicycle racking system. These components of the bicycle attachment assembly are moveable between a folded orientation and an unfolded orientation relative to the mounting structure.

These and other aspects of the present disclosure are carried out by providing a powered bicycle racking system that is adapted to be integrated into, or mounted beneath, a rear bumper of the motor vehicle. The powered bicycle racking system includes a power-operated presenter unit and a mounting structure to which a folding bicycle attachment assembly is secured. The presenter unit includes a housing fixed to a rigid structure of the motor vehicle and a telescopic tube assembly that is moveable relative to the housing between retracted and extended positions in response to controlled actuation of a drive system located within the housing. A terminal end of the tube assembly is secured to the mounting structure such that the mounting structure moves the folding bicycle attachment assembly between the retracted and extended positions in response to movement of the tube assembly. The drive system includes a motor-driven leadscrew assembly configured to convert rotation of a leadscrew into translation of the tube assembly. The folding bicycle attachment assembly is folded and concealed by the mounting structure when the tube assembly is located in its retracted position. The folding bicycle rack assembly can be unfolded for releasably mounting a bicycle thereto when the tube assembly is located in its extended position.

It is an aspect of the present disclosure to provide a powered bicycle presenter unit or module that is adapted to mounted to a deck lid of a motor vehicle and which can be moved between a retracted or stored position and an extended or operative position. The powered bicycle presenter module including a telescoping rack apparatus and a power-operated drive mechanism arranged to move the rack apparatus between its retracted and extended positions.

It is another aspect of the present disclosure to provide the powered bicycle presenter module with a mounting system for securing a first portion of the rack apparatus and the drive mechanism to the deck lid within the trunk storage area of the vehicle to facilitate telescopic movement of a second portion of the rack apparatus relative to an aperture in the deck lid. A cap or cover member attached to the telescopically moveable second portion of the rack apparatus when located in the retracted position.

It is yet another aspect of the present disclosure to provide the rack apparatus with a mounting member extending between a first end and a second end and a telescoping member extending between a first end and a second end. The telescoping member is nestled in the mounting member for telescoping movement between a retracted position with said first ends adjacent one another and an extended position with staid first end of the telescoping member adjacent the second end of the mounting member.

It is a further aspect of the present disclosure to provide the power-operated drive mechanism to move the telescoping member between its retracted position and its extended position by moving the telescoping member relative to the mounting member from the retracted position to the extended position and vice versa by moving the telescoping member from the extended position to the retracted position. A system utilizing cables, cable guides, and anchors translate rotational movement of a drum powered by an electric motor to linear movement to effect telescopic action of the telescoping member relative to the mounting member. A bicycle holder on the telescoping member receives a bicycle when the telescoping member is in the extended position, extending outside a trunk of a vehicle.

These and other aspects of the present disclosure are carried out by providing a telescoping apparatus adapted to extend from a trunk lid of a vehicle for transporting a bicycle, the apparatus comprising: a mounting member extending between a first end and a second end; a telescoping member extending between a first end and a second end nestled in the mounting member for telescoping movement between a retracted position with the first ends adjacent one another and an extended position with the first end of the telescoping member adjacent the second end of said mounting member; a power-operated drive mechanism to move the telescoping member between the retracted position and the extended position by moving the telescoping member relative to the mounting member from the retracted position to the extended position and vice versa by moving the telescoping member from the extended position to the retracted position; and a bicycle holder to receive a bicycle when the telescoping member is in the extended position.

The telescope apparatus including at least one vehicle attachment bracket fastened to the mounting member for coupling the mounting member to the inside of a trunk lid of a vehicle with the mounting member and the telescoping member being totally disposed inside the vehicle trunk when in the retracted position with the telescoping member extending outwardly from an extension hole in the extended position to present the bicycle holder.

The telescope apparatus further including a motor mounting bracket fastened to the mounting member, a drum rotatably attached to the motor mounting bracket, and an electric motor attached to the motor mounting bracket to rotate the drum.

The telescope apparatus further comprising: at least one cable in tension and entrained around the drum and attached to the telescoping member to effect telescopic movement of the telescoping member relative to the mounting member; at least one cable guide to engage and transform the direction of the at least one cable upon rotation of the drum; at least one spring attached to the at least one cable to provide tolerance compensation to the at least one cable upon movement of the telescoping member relative to the mounting member; and a pair of slide guides attached to the mounting member to guide the telescoping member relative to the mounting member during extension and retraction of the telescoping member.

The telescope apparatus further including a hinge attached to the telescoping member and a guard plate attached to the hinge for allowing pivotal movement of the guard plate about the hinge between a guard plate recessed position storing the guard plate within the telescoping member when the telescoping member is in the retracted position and a guard plate protracted position extending perpendicular to the telescoping member when the telescoping member is in the extended position.

These and other aspects of the present disclosure may also be carried out by providing a telescoping apparatus adapted to extend from a trunk lid of a vehicle for transporting a bicycle, the apparatus comprising: a mounting member extending between a first end and a second end; a first telescoping member extending between a first end and a second end nestled in the mounting member for telescoping movement between a retracted position with the first ends adjacent one another and an extended position with the first end of the first telescoping member adjacent the second end of the mounting member; a second telescoping member extending between a first end and a second nestled in the first telescoping member for telescoping movement between the retracted position and the extended position with the first ends adjacent one another in the retracted position and the first end of the second telescoping member adjacent the second end of the first telescoping member in the extended position; a power-operated drive mechanism operable to move the first telescoping member and the second telescoping member between the retracted position and the extended position by moving the first telescoping member relative to the mounting member from the retracted position to the extended position while moving the second telescoping member from the retracted position to the extended position and vice versa by moving the first telescoping member from the extended position to the retracted position while moving the second telescoping member from the extended position to the retracted position; and a bicycle holder to receive a bicycle when the second telescoping member is in the extended position.

The telescope apparatus further including at least one vehicle attachment bracket fastened to the mounting member for coupling the mounting member to the inside of a trunk lid of a vehicle, wherein the mounting member and the first telescoping member and the second telescoping member are totally disposed inside the vehicle trunk when in the retracted position, and wherein the first telescoping member and the second telescoping member extending outwardly from an extension hole when in the extended position to present the bicycle holder.

These and other aspects, advantages and features of the present disclosure will become readily apparent from the following detailed description when taken in conjunction with the accompanying drawings. Further areas of applicability will also become apparent from the detailed description provided herein. The description and specific examples in this summary are intended for purposes of illustration only and are not intended to limit the scope of the present disclosure.

### DRAWINGS

The drawings described herein are for purposes of illustration only of selected embodiments of the present disclosure and are not intended to limit its scope or possible implementations. In accordance with the teachings of the present disclosure, the drawings include:
FIG. 1 illustrates a rear portion of a motor vehicle equipped with a powered bicycle racking system constructed in accordance with teachings of the present disclosure and shown in a fully retracted condition;
FIG. 2 illustrates the motor vehicle of FIG. 1 and shows the powered bicycle racking system in a fully extended condition;
FIG. 3 is a perspective view of the powered bicycle racking system positioned in its fully retracted condition with a bicycle attachment assembly shown in a locked and folded condition;
FIG. 4 is a perspective view of the powered bicycle racking system positioned in its fully extended condition with the bicycle attachment assembly shown in an unlocked and unfolded condition;
FIG. 5 illustrates another perspective view that is similar to FIG. 4 showing a bicycle secured to the bicycle attachment assembly;

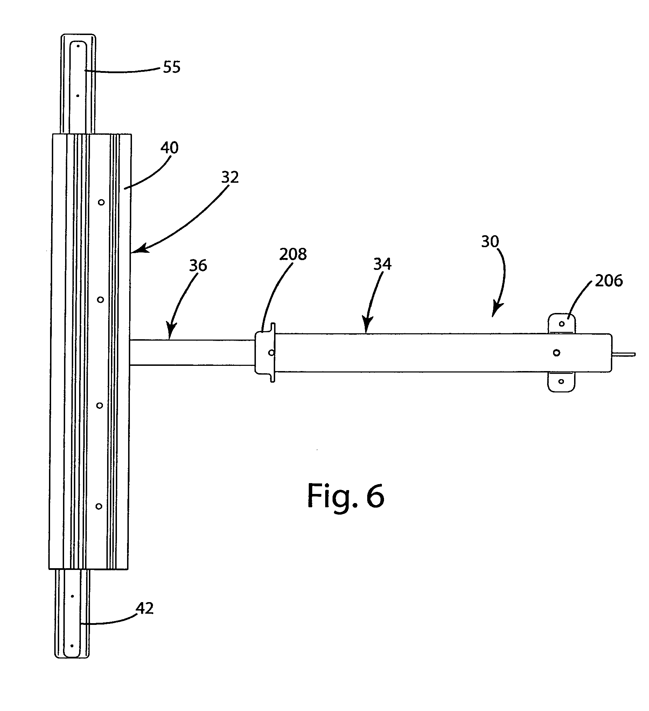

FIG. 6 is a bottom view of the powered bicycle racking system;
FIG. 7 is a longitudinal sectional view taken generally along line 7-7 of FIG. 3 to better illustrate the components of a power-actuated presenter unit that is associated with the powered bicycle racking system of the present disclosure;
FIG. 8 is an enlarged partial end view of the sectional view of FIG. 7;
FIG. 9 is a perspective view illustrating a mounting location for the powered bicycle racking system within a trunk portion of the motor vehicle.
FIG. 10 is a perspective view of a powered bicycle presenter unit constructed according to the present disclosure and shown in a fully retracted condition;
FIGS. 11 through 13 are perspective views of the powered bicycle presenter unit of FIG. 10 in a fully extended condition;
FIG. 14 illustrates a rear portion of a motor vehicle equipped with the powered bicycle presenter unit in its fully extended condition extending from a deck lid of the motor vehicle; and
FIG. 15 is a perspective view of the powered bicycle presenter unit mounted to an underside surface of the deck lid.

### DETAILED DESCRIPTION

Example embodiments of powered bicycle racking systems constructed in accordance with teachings of the present disclosure will now be more fully described with reference to the accompanying drawings. However, the exemplary embodiments are provided so that this disclosure will be thorough and fully convey the scope to those skilled in this art. To this end, numerous specific details are set forth as examples of specific components, devices, functional interactions and methods of operation to provide a thorough understanding of the disclosed embodiments of the present disclosure. It will, however, be apparent to those skilled in the art that all specific details need not be employed or described, that the example embodiments may be embodied in many different forms, and that neither should be construed to limit the scope of the disclosure.

In general, the present disclosure is directed to powered bicycle racking systems for use with motor vehicles. It is anticipated that the term "motor vehicles" shall be construed to include, without limitation, passenger cars, SUVs, pick-up trucks, buses, RV's and any other type of vehicle routinely used to transport passengers. Additionally, the powered bicycle racking systems of the present disclosure are each shown as a vehicle-integrated module or unit that is adapted for use as an OEM installed system or as an aftermarket system, each capable of being mounted within a trunk compartment or underneath the chassis of the motor vehicle. Appreciating that these systems are capable of several different vehicle mounting configurations, only vehicle-integrated versions will be detailed hereinafter with specificity.

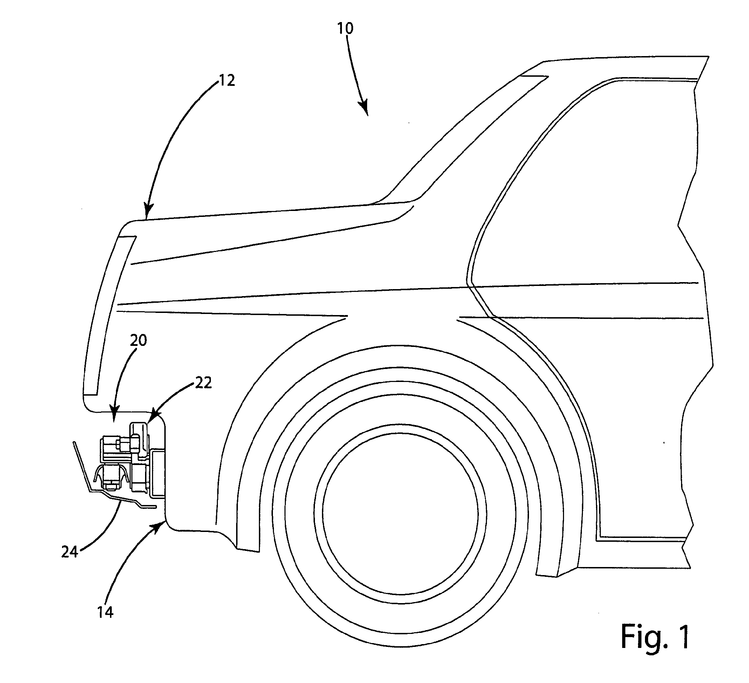

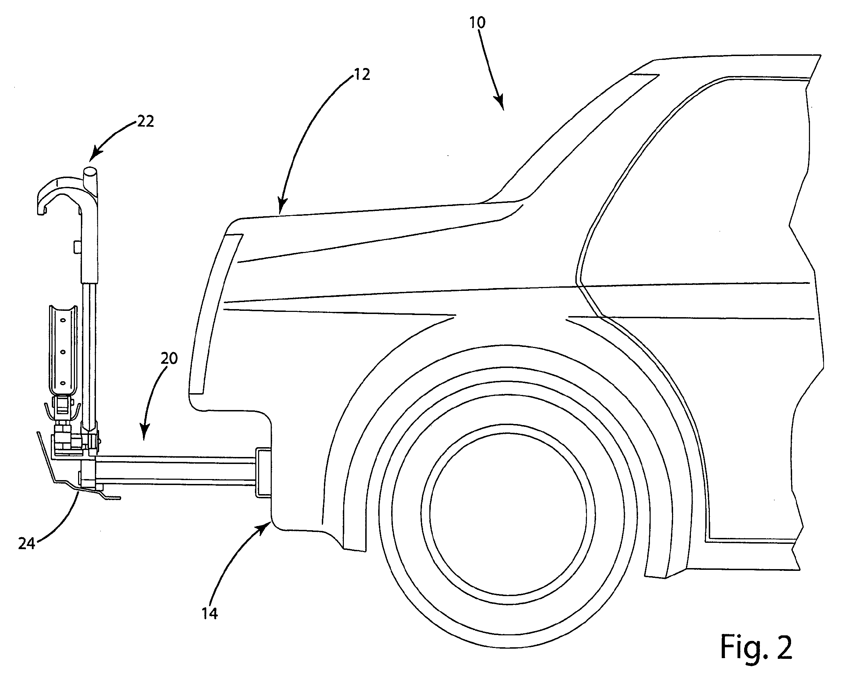

Referring initially to FIGS. 1 and 2, a general outline of an exemplary motor vehicle 10 is shown to include a rear portion defining an upper trunk area 12 and a lower bumper area 14. In accordance with the teachings of the present invention, a powered bicycle racking system, hereinafter referred to as "system" 20, is operatively associated with and aligned along a longitudinal axis of vehicle 10. System 20 is shown in FIG. 1 with its moveable components located in a "retracted" position relative to a central cavity formed in bumper area 14. In contrast, system 20 is shown in FIG. 2 with its moveable components located in an "extended" position relative to bumper area 14.

As will be detailed, components of a bicycle attachment assembly 22 are positioned in a "folded" orientation and concealed within bumper area 14 when the moveable components of system 20 are located in the retracted position. A central bumper cover 24 functions to conceal folded bicycle attachment assembly 22 and other moveable components of system 10 in this retracted position. In contrast, components of bicycle attachment assembly 22 are positioned in an "unfolded" orientation and disposed rearwardly of bumper area 14 when the moveable components of system 20 are located in the extended position. This allows the user uninhibited access to bicycle attachment assembly 22 for releasably mounting a bicycle thereon.

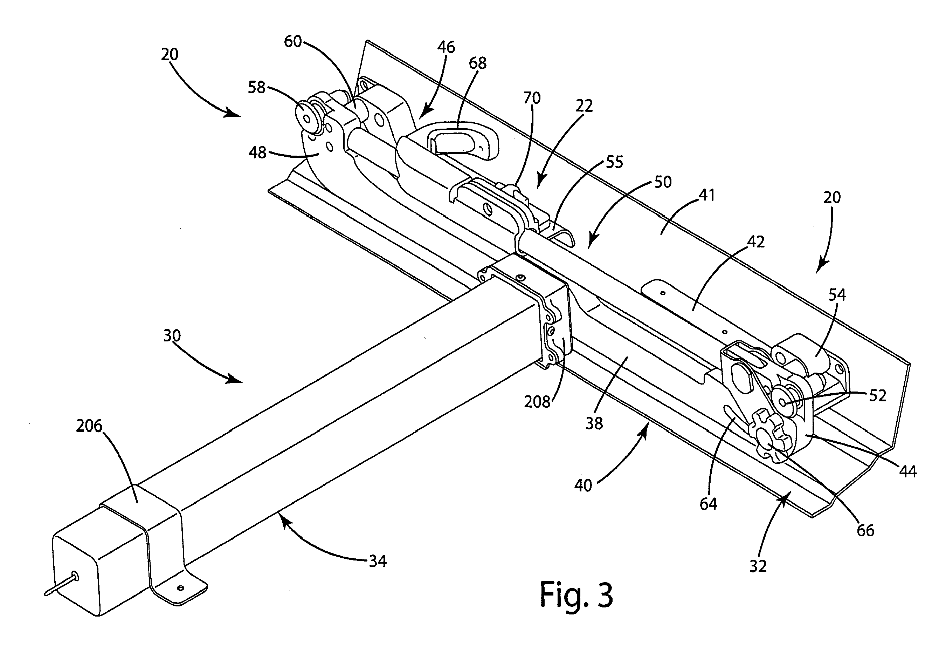

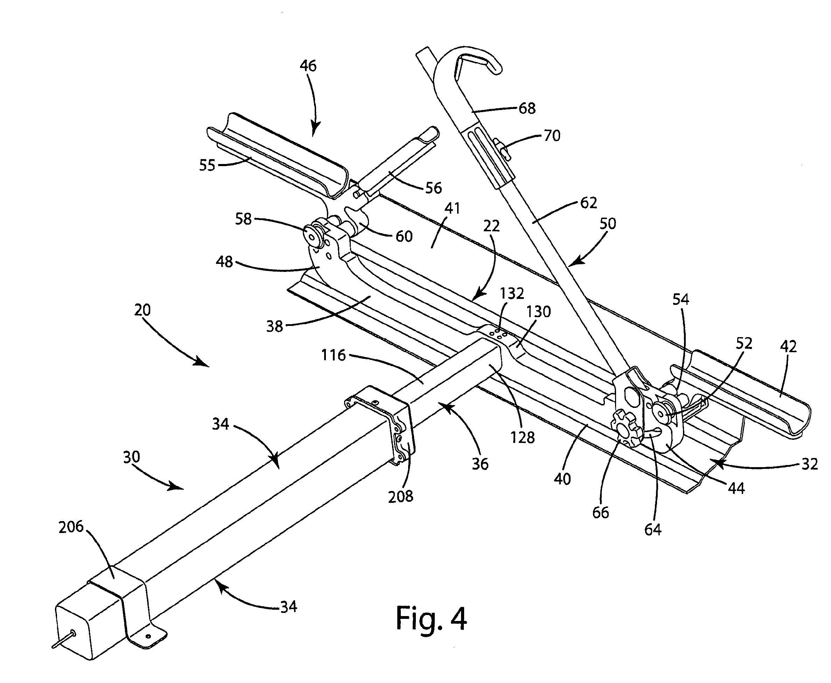

With reference now primarily to FIGS. 3 and 4, system 20 is shown constructed as a module or unit including a power-operated presenter unit 30, and a mounting structure 32 to which bicycle attachment assembly 22 is secured. Presenter unit 30 includes a stationary housing 34 adapted to be rigidly secured to a portion of vehicle 10 and a telescopic tube assembly 36 that is moveable relative to housing 34. An end of tube assembly 36 is secured to at least one of mounting structure 32 and a mounting arm 38 of bicycle attachment assembly 22. In the embodiment shown, mounting arm 38 of bicycle attachment assembly 22 is releasably secured to mounting structure 32 to permit optional rack devices and/or storage devices to be installed on mounting structure 32 when it is desired to transport devices other than a bike such as, for example, skis or snowboards. Mounting structure 32 is a rigid bracket having a lower rail segment 40 to which mounting arm 38 of bicycle attachment assembly 22 is secured, and a transverse flange segment 41 configured to enclose bicycle attachment assembly 22 in its folded condition and to which bumper cover 24 can be secured.

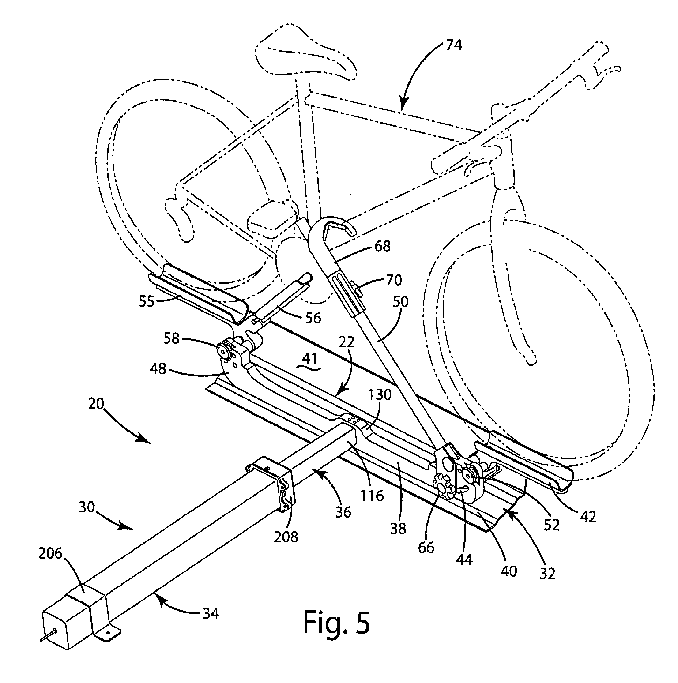

With continued reference primarily to FIGS. 3 and 4, the components associated with bicycle attachment assembly 22 will be described in greater detail. In FIG. 3, the components of bicycle attachment assembly 22 are in a folded orientation while FIG. 4 illustrates the same components unfolded to operative positions. Bicycle attachment assembly 22 is shown to include a front tire support tray 42 pivotably supported from a first end 44 of mounting arm 38, a combination rear tire support tray 46 pivotably supported from a second end 48 of mounting arm 38, and a frame tube support assembly 50 pivotably supported from first end 44 of mounting arm 38. A spring-loaded release pin 52 functions in cooperation with a locking cam 54 to permit movement of front tire support tray 42 between its folded and unfolded positions and thereafter lock front tire support tray 42 in the selected one of the two distinct positions until spring-loaded release pin 52 is subsequently activated. Combination rear tire support tray 46 includes a lower tire support tray 55 that is interconnected to a side tire support tray 56. A spring-loaded release pin 58 functions in cooperation with a locking cam 60 to permit pivotal movement of combination rear tire support tray 46 between its folded and unfolded positions and thereafter lock combination rear tire support tray 46 in the selected one of the two distinct positions until spring-loaded release pin 58 is subsequently activated. Frame tube support assembly 50 includes a tubular shaft 62 pivotably moveable at a first end via a lost-motion slot and pin mechanism 64 having a manually-operable handle locking device 66. A sliding clamp assembly 68 is associated with a second end of tubular shaft 62 and includes a manually-operable handle locking device 70. FIG. 5 illustrates a bicycle 74 mounted in and secured by bicycle attachment assembly 22. As is evident, front tire support tray 42 supports a front wheel 76 of bicycle 74, combination rear tire support tray 46 supports rear tire 78 of bicycle 74, and frame tube support assembly 50 is adapted to engage and restrain a tubular frame portion 80 of bicycle 74. Upon removal of bicycle 74 from rack assembly 22, the support members are returned to their folded position (FIG. 3) to be housed behind and below the top of transverse flange segment 41 of mounting bracket 32.

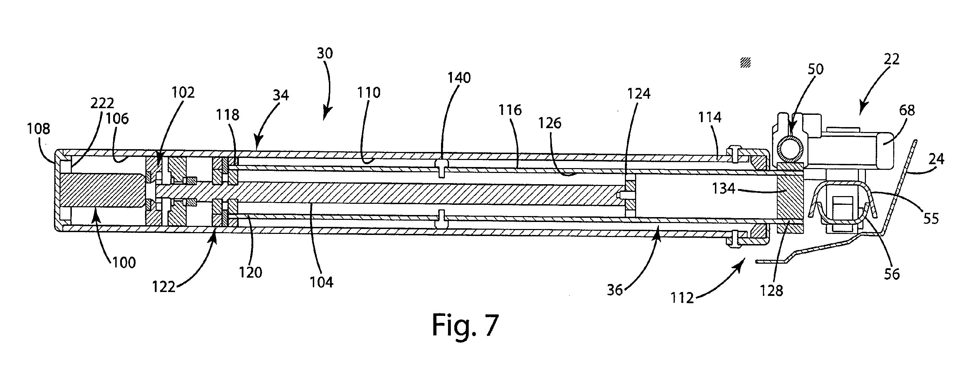

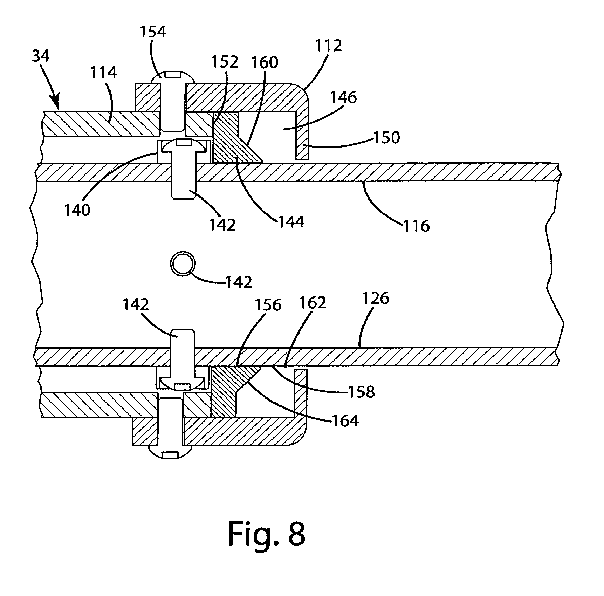

Referring to FIGS. 7 and 8, an exemplary construction for presenter unit 30 will now be described in more detail. Presenter unit 30 is a power-operated leadscrew assembly generally configured to include an electric motor 100, a reduction gearset 102 driven by electric motor 100, and an elongated externally- threaded leadscrew 104 having a first end rotatably driven by an output member of reduction gearset 102. Electric motor 100 and reduction gearset 102 are positioned within a motor chamber 106 formed in a closed first end 108 of housing 34. Leadscrew 104 extends lengthwise within a telescopic chamber 110 of housing 34. An end cap 112 is attached to an open second end 114 of housing 34. Telescoping tube assembly 36 is disposed for bi-directional translational movement within telescopic chamber 110 of housing 34. Tube assembly 36 includes a generally square tube 116 aligned within a generally square telescopic chamber 110 within housing 34 so as to surround leadscrew 104. A threaded end plate 118 is fixed to a first end 120 of tube 116 and includes internal threads that are in meshed engagement with external threads on leadscrew 104. When tube assembly 36 is located in its fully retracted position (FIG. 7) within housing 34, end plate 118 engages or is in close proximity to a wear plate 122 that is fixed axially within chamber 110 of housing 34. As seen, leadscrew 104 passes through a central aperture formed in wear plate 122. A centralizing wear plate 124 is fixed to a second end of leadscrew 104 and slidingly engages an inner surface 126 of tube 116. As best shown in FIG. 4, a second end 128 of tube 116 is fixed to a central mounting portion 130 of carrier arm 38 using mechanical fasteners, such as screws 132. A support end block 134 is retained within second end 128 of tube 116 to assist in providing a rigid attachment thereof to carrier arm 38.

An endstop plate 140 is secured via fasteners 142 to an intermediate portion of tube 116 and its axial location functions to limit the amount of extensible travel of tube assembly 36 relative to housing 34. As best seen from FIG. 8, a rubber annular seal 144 and an annular bearing 146 surround tube 116 and are located within endcap 112 between a radial wall 150 of end cap 112 and a terminal end 152 of housing 34. Fasteners 154 secure endcap 112 to second end 114 of housing 34. Seal 144 has an inner surface 156 slideably engaging an outer surface 158 of tube 116 and further includes a first or male conical portion 160. Bearing 146 has an inner surface 162 slideably engaging outer surface 158 of tube 116 and further includes a second or female conical portion 164. As seen, first conical portion 160 of seal 144 is nested with second conical portion 164 of bearing 146 in the annular space defined between end wall 150 of endcap 112 and terminal end 152 of housing 34. As such, tube assembly 36 reaches the limit of its extension due to endstop plate 140 engaging seal 144 and creating a resilient locking condition which causes surface 156 of seal 144 to effectively brake continued axial movement of tube 116. The conical arrangement may also act as a wedging effect to provide rigidity.

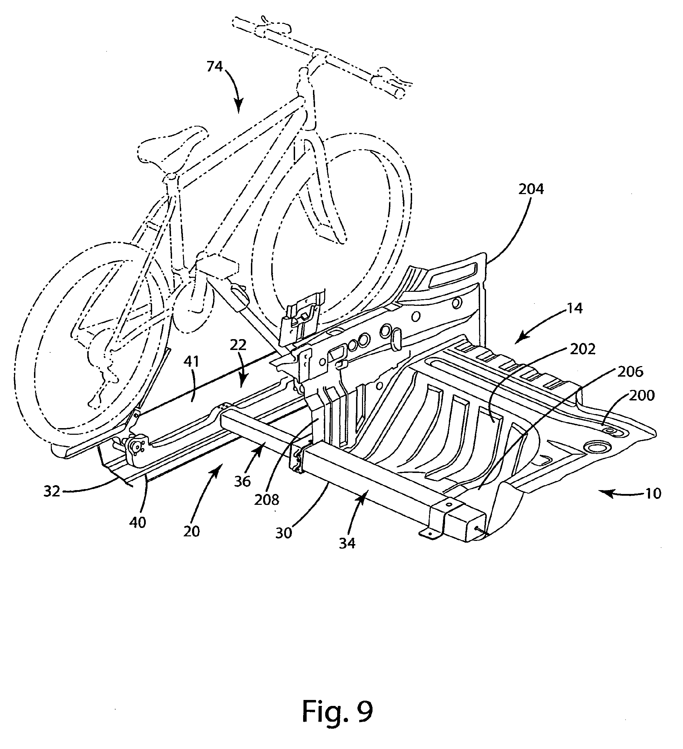

FIG. 9 illustrates an exemplary mounting arrangement for assembly 20 within a wheel well portion 200 of trunk 12 and in general alignment with a center portion of bumper 14. Wheel well portion 200 includes a recessed wheel cavity 202 and a transverse wall portion 204 that generally defines the rear trunk wall of vehicle 10. Assembly 20 is shown with presenter unit 30 having a first or forward mounting bracket 206 for securing housing 34 in cavity 202 and a second of rear mounting bracket 208 associated with endcap 112 for securing housing 34 to transverse wall 204. Mounting structure 32 has length, width height dimensions (FIG. 3) selected to contain and enclose all components of attachment assembly 22 prior to retracting attachment assembly 22. Bumper cover 24 can be secured to a front face of transverse flange section 41 on mounting structure 32. As mentioned, assembly 20 can, with only minor modifications, be optionally configured to be mounted below bumper 14 to a rigid underbody structure of vehicle 10.

In operation, an electronic control module 220 mounted in motor chamber 106 of housing 34 (FIG. 7) receives a signal from a signal transmitter device such as, for example, a mobile phone, a wireless transmitter or an onboard vehicle switch. The signal is indicative of an operational mode selected, namely a first mode wherein assembly 20 is retracted and a second mode wherein assembly 20 is extended. Upon receipt of the signal, electronic control module 220 controls actuation of electric motor 100 for rotating leadscrew 104 and causing translational movement of tube assembly 36 relative to housing 34. When the signal requests movement of tube assembly 36 and the mounting structure 32 from the fully retracted position (FIGS. 1 and 3) into the fully extended position (FIGS. 2 and 4), motor 100 drives leadscrew 104 in a first rotary direction and tube assembly 36 is extended until endstop plate 140 engages seal 144 within end cap 112. As noted, seal 144 is compressed and thereby applies a reaction load on tube assembly 36. The software associated with control module 220 recognizes the increased current draw and automatically shuts down power to electric motor 100, thereby positively locating tube assembly 36 of presenter unit 30 in its fully extended position. In addition, it is contemplated that obstacle detection logic may be integrated into the software to determine if an obstacle is preventing movement of telescoping tube assembly 36 into either of its fully extended or fully retracted positions. Hall effect feedback from motor 100 may be utilized to provide this type of obstacle detection for shutting down movement of telescoping tube assembly 36 until the obstacle is removed. This obstacle detection will also prevent retraction of tube assembly 36 if a request to fully retract system 20 is demanded with bicycle attachment assembly 22 still in its unfolded condition. When it is desired to return tube assembly 36 to its fully retracted position, the control module 220 controls motor 100 for causing leadscrew 104 to be rotated in a second rotary direction.

Based on the above description, powered bicycle racking system 20 provides a power-operated unit that can be easily operated to move a folding attachment assembly 22 (or any other mounting device secured to mounting structure 32) between a concealed position within or below vehicle 10 and an exposed position displaced from vehicle 10. Specific advantages may include: provisions for a vehicle-integrated system that is compact and housed inside a bumper space; provisions for quiet operation and easy access to bicycle mounting components; provisions for quick deployment with integrated obstacle detection; provisions to accept a plurality of different attachment devices to facilitate mounting of other items (i.e., skis, snowboard, cargo box, etc.) to the vehicle; provisions to provide a folding bicycle attachment assembly adapted to accept bicycles of sizes; provisions to permit controlled operation remotely by a wireless transmitter or mobile phone application; provisions to integrate an electric outlet and/or charger cord to permit charging of battery assisted bicycles when mounted; and provisions to integrate brake lights and turn signals into the moveable mounting structure.

While disclosed using only a single powered presenter unit 30, system 20 can also be modified to include a pair of laterally-spaced presenter units if additional stability is required for large load applications (i.e., multiple bicycles on bus, etc.). In addition, presenter unit 30 can optionally be a pneumatic or hydraulic linear actuator configured to controllably move the bicycle attachment assembly between its retracted and extended positions.

The present disclosure is also directed to a powered bicycle presenter assembly or module 300 that is adapted to be secured to a surface of a deck lid of a motor vehicle and which includes a bicycle storage/transport assembly that is moveable between a retracted position and an extended position relative to the deck lid to facilitate releasable mounting of one or more bicycles thereto. The powered bicycle presenter module 300 generally includes a telescoping rack apparatus 310 and a power-operated drive mechanism 400 operable for translating at least one component of the rack apparatus 310 between the retracted and extended positions. The following detailed description is provided to thoroughly disclose an example embodiment of powered bicycle presenter 300 and fully convey its structural configuration and operational characteristics to those skilled in the art. It will, however, be apparent to those skilled in the art that specific details need not be employed, that the example embodiment may be embodied in many alternative forms, and that neither should be constructed to limit the scope of the disclosure.

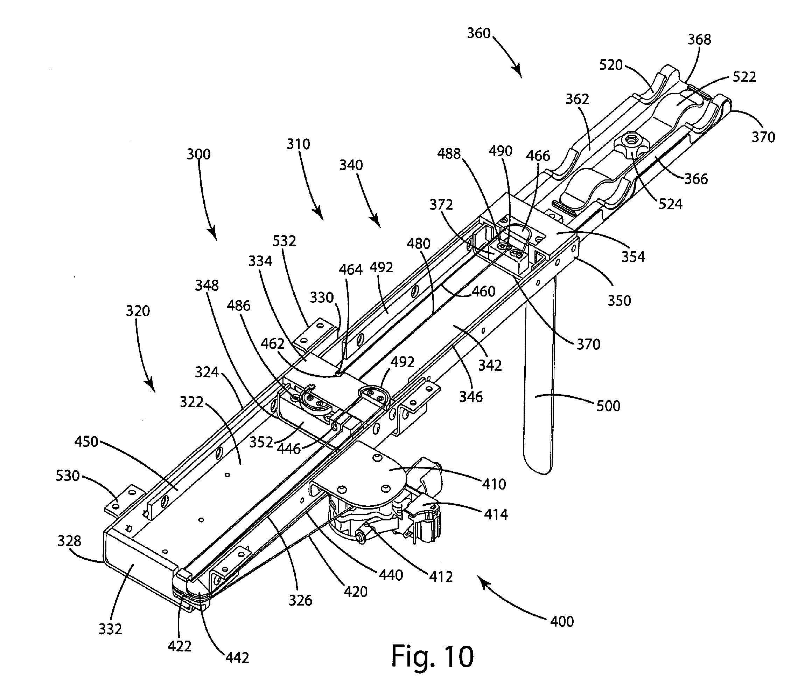

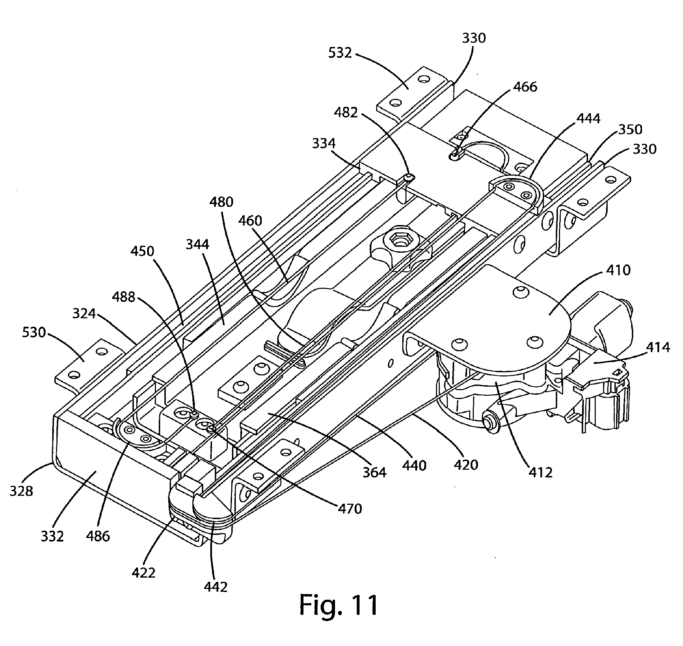

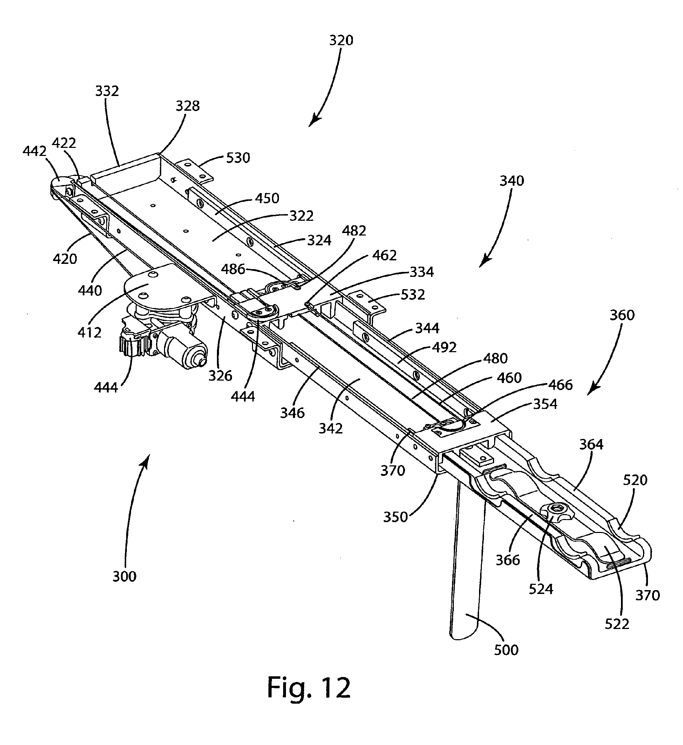

Referring to the Figures, wherein like numerals indicate corresponding parts throughout the several views, the telescoping rack apparatus 310 for extending from the trunk lid of a vehicle for transporting a bicycle, is illustrated. As shown in Figures 10-12, the rack apparatus 310 includes a mounting member 320 defining a bottom 322 as well as a first side 324 and a second side 326. First side 324 and second side 326 of the mounting member 320 extend transversely to and along the bottom 322 between a first end 328 and a second end 330 to define a C-shaped cross section. The mounting member 320 may be produced from many materials, including steel, aluminum, glass-reinforced polypropylene, a composite, carbon fiber, plastic, or any other metal or elastomeric with the requisite rigidity and other physical properties.

The mounting member also includes a mounting end wall 332. The mounting end wall 332 extends transversely to the bottom 322 at the first end 328 of the mounting member 320 and between the first side 324 and the second side 326, thereby closing the first end 328 of the mounting member 320. Additionally, the mounting member 320 includes a mounting anchor plate 334 extending transversely to the bottom 322 at the second end 330 and between the first side 324 and the second side 326 of the mounting member 320. The mounting end wall 332 and the mounting anchor plate 334 may be used as locations to support portions of a power operated drive mechanism 400 effecting telescopic action, as discussed in more detail below.

The rack apparatus 310 further includes at least one translational component or telescoping member extends into and retract inside of, and relative to, the mounting member 320. It should be understood that any number of telescoping members may be used. The current embodiment includes a first telescoping member 340 defining a base 342 and a first flange 344 and a second flange 346. The first flange 344 and second flange 346 of the first telescoping member 340 extend transversely to and along the base 342 between a first end 348 and a second end 350 to define a C-shaped cross section nestled in the mounting member 320. Nestling the first telescoping member 340 in the mounting member 320 allows for telescoping movement between a retracted position with the first ends 328, 348 adjacent one another in the retracted position and an extended position with the first end 328 of the first telescoping member 340 adjacent the second end 330 of the mounting member 320 in the extended position. The first telescoping member 340 may be produced from many materials, including steel, aluminum, glass-reinforced polypropylene, a composite, carbon fiber, plastic, or any other metal or elastomeric with the requisite rigidity and other physical properties.

The first telescoping member 340 includes a first telescoping end wall 352 extending transversely to the base 342 at the first end 348 and between the first flange 344 and the second flange 346 to close the first end 348 of the first telescoping member 340. The first telescoping member 340 also includes a first telescoping anchor plate 354 extending transversely to the base 342 at the second end 350 and between the first flange 344 and the second flange 346 of the first telescoping member 340. The first telescoping end wall 352 and the first telescoping anchor plate 354 may be used as locations to support portions of the power-operated drive mechanism 400 effecting telescopic action, as discussed in more detail below.

As discussed above, the rack apparatus 310 of the present disclosure may include any number of telescoping members. To this end, the present embodiment of the present disclosure includes a second telescoping member 360 defining a tray 362 and a first rail 364 and a second rail 366. The first rail 364 and the second rail 366 extend transversely to and along the tray 362 between a first end 368 and a second end 370 to define a generally C-shaped cross section nestled in the first telescoping member 340. Nestling the second telescoping member 360 within the first telescoping member 340 allows for translational or telescoping movement between the retracted position and the extended position with the first ends 348, 368 adjacent one another in the retracted position and the first end 368 of the second telescoping member 360 adjacent the second end 350 of the first telescoping member 340 in the extended position. The second telescoping member 360 may be produced from many materials, including steel, aluminum, glass-reinforced polypropylene, carbon fiber, a composite, plastic, or any other metal or elastomeric with the requisite rigidity and other physical properties. The second telescoping member 360 also includes a second telescoping end wall 372 which extends transversely to the tray 362 at the first end 368 and between the first rail 364 and the second rail 366 closing the first end 368 of the second telescoping member 360. The second telescoping end wall 372 may be used as a location to support portions of the power operated drive mechanism 400 effecting telescopic action, as discussed in more detail below.

As stated above, the powered bicycle presenter module 300 of the present disclosure includes power-operated drive mechanism 400 that is operable to move the first telescoping member 340 and the second telescoping member 360 between their respective retracted and extended positions. The power-operated drive mechanism 400 accomplishes this by converting rotational movement into linear movement to move the first telescoping member 340 relative to the mounting member 320 from its retracted position to its extended position while moving the second telescoping member 360 from its retracted position to its extended position and vice versa by moving the first telescoping member 340 from its extended position to its retracted position while moving the second telescoping member 360 from its extended position to its retracted position. It should be appreciated that the power-operated drive mechanism 400 of the present disclosure may be implemented in various ways. Such a power-operated drive mechanism 400 may be, but is not limited to, a motor driven cable and drum system, a motor driven worm gear system, a motor driven pulley system, a motor driven lead screw system, a pneumatic or hydraulic cylinder, a push/pull cable system, a rack and pinion system, or any combination of the above. Described below is the power-operated drive mechanism 400 configured as a motor-driven cable and drum system.

The power-operated drive mechanism 400 includes a motor mounting bracket 410 fastened to the second side 326 of the mounting member 320. The motor mounting bracket 410 may be located on any of the members 320, 340, 360. As described herein, however, the motor mounting bracket 410 is located at the second end 330 of the mounting member 320. A drum 412 of circular shape is rotatably attached to the motor mounting bracket 410 and an electric motor 414 is also attached to the motor mounting bracket 410, thereby allowing the electric motor 414 to rotate the drum 412. Any type of motor may be used to rotate the drum 412, including DC motors, induction motors, synchronous motors, brushless motors, or any other electric motor. The present embodiment includes a 12 volt DC motor including a self-locking worm gearbox to prevent back drive of the motor. Additionally a direct drive motor with a locking mechanism may be used to prevent unintended movement of the telescopic members.

The power-operated drive mechanism 400 utilizes anchored cables and cable guides to translate the rotational movement of the drum 412 to linear movement of the telescoping members. The cables may be made from steel, an ultra-high molecular weight polyethylene, or any other material having the desired physical properties. Additionally, the drum 412 could be made from a plastic, metal, or any other material having the desired physical properties. Described herein is an example of a cable setup which may be used to drive the telescopic action of the first telescoping member 340 relative to the mounting member 320.

To retract the first telescoping member 320, a first cable 420 is in tension and entrained around the drum 412 to retract the first telescoping member 340 relative to the mounting member 320 and a second cable 440 is in tension and attached to the drum 412 to extend the first telescoping member 320 relative to the mounting member 320. A first, cable guide 422 is fixed to the mounting end wall 332 at the second side 326 of the mounting member 320 to engage and transform the direction of the first cable 420 to the first end 348 of the first telescoping member 340. The first cable 420 is connected to a first anchor 424 on the mounting end wall 332of the first telescoping member 340 to retract the first telescoping member 340 relative to the mounting member 320 upon rotation of the drum 412. A first spring 426 may also be attached to the first cable 420 at the first anchor 424 to provide tolerance compensation to the first cable 420 upon retraction of the first telescoping member 340 relative to the mounting member 320.

To extend the first telescoping member 340, a second cable guide 442 fixed to the mounting end wall 332 about the second side 326 of the mounting member 320 engages and transforms the direction of the second cable 440 towards the second end 350 of the first telescoping member 340. Additionally, a third cable guide 444 attached to the mounting anchor plate 334 engages and transforms the direction of the second cable 440 to the first end 348 of the first telescoping member 340. A second anchor 446 on the first telescoping end wall 352 is utilized to extend the first telescoping member 340 relative to the mounting member 320 upon rotation of the drum 412. A second spring 448attached to the second cable 440 at the second anchor 446 may be used to provide tolerance compensation to the second cable 440 upon extension of the first telescoping member 340 relative to the mounting member 320.

It should be noted that the drum 412 may be rotated in a clockwise orientation and a counter-clockwise orientation, one rotational direction pulling on the first cable 420 and effecting retraction of the first telescoping member 340 and the other rotational direction pulling on the second cable 440 and effecting extension of the first telescoping member 340. To assist the power operated drive mechanism 400, a pair of first slide guides 450, 452 may be attached to the first side 324 and the second side 326 and extending parallel to the bottom 322 of the mounting member 320 to guide the first telescoping member 340 relative to the mounting member 320 during extension and retraction of the first telescoping member 340 into and out of the mounting member 320. The first slide guides 450, 452 may be made from an acetal plastic, metal, or any elastomeric material having the desired physical property characteristics.

Described herein is an example of a cable setup which may be used to drive the telescopic action of the second telescoping member 360 relative to the first telescoping member 340 utilizing the energy created by the power operated drive mechanism 400. A third cable 460 in tension is used to extend the second telescoping member 360 relative to the first telescoping 340 member and a fourth cable 480 in tension is used to retract the second telescoping member 360 relative to the first telescoping member 340.

To extend the second telescoping member 360, a third anchor 462 attaches the third cable 460 to the mounting anchor plate 334. A third spring 464 may be attached to the third cable 460 at the third anchor 462 to provide tolerance compensation to the third cable 460 upon extension of the second telescoping member 360 relative to the first telescoping member 340. A fourth cable guide 466 attached to the first telescoping anchor plate 354 engages and transforms the direction of the third cable 460 towards the first end 368 of the second telescoping member 360. Finally, a fourth anchor 468 attached to the second telescoping end wall 372 extends the second telescoping member 360 relative to the first telescoping member 340 upon extension of the first telescoping member 340 relative to the mounting member 320. This can be seen by referencing the Figures. Additionally, a fourth spring 470 may be attached to the third cable 460 at the fourth anchor 468 to provide tolerance compensation to the third cable 460 upon extension of the second telescoping member 360 relative to the first telescoping member 340.

To retract the second telescoping member 360, a fifth anchor 482 attaches the fourth cable 480 to the mounting anchor plate 334. A fifth spring 484 may be attached to the fourth cable 480 at the fifth anchor 482 to provide tolerance compensation to the fourth cable 480 upon retraction of the second telescoping member 360 relative to the first telescoping member 340. A fifth cable guide 486 attached to the first telescoping end wall 352 about the first end 348 of the first telescoping member 340 engages and transforms the direction of the fourth cable 480 towards the first end 368 of the second telescoping member 360. Finally, a sixth anchor 488 attaches the fourth cable 480 to the second telescoping end wall 372 of the second telescoping member 360 to retract the second telescoping member 360 relative to the first telescoping member 340 upon retraction of the first telescoping member 340 relative to the mounting member 320. A sixth spring 490 may be attached to the fourth cable 480 at the sixth anchor 488 to provide tolerance compensation to the fourth cable 480 upon retraction of the second telescoping member 360 relative to the first telescoping member 340.

To assist the power-operated drive mechanism 400, a pair of second slide guides 492, 494 may be attached to the first flange 344 and the second flange 346 and extending parallel to the base 342 of the first telescoping member 340 to guide the second telescoping member 360 relative to the first telescoping member 340 during extension and retraction of the second telescoping member 360 into and out of the first telescoping member 340. The second slide guides 492, 494 may be made from an acetal plastic, metal, or any elastomeric material having the desired physical property characteristics.

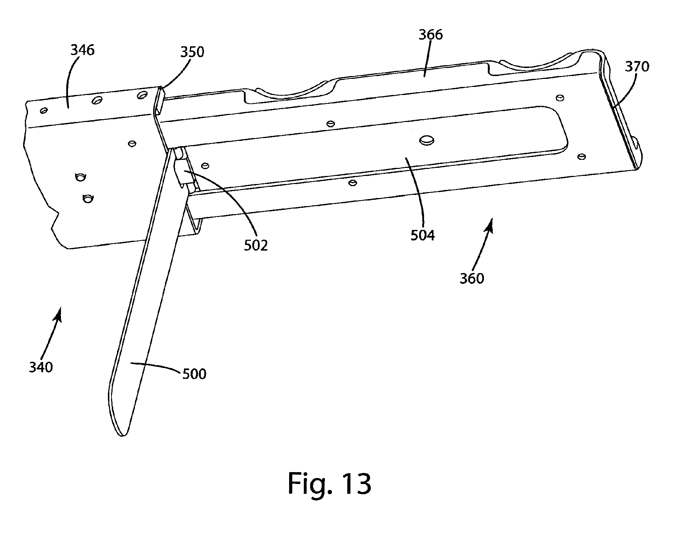

As shown in Figure 13, the powered bicycle presenter module 300 may also include a guard plate 500 to prevent damage to a vehicle due to bicycle movement during transportation. The guard plate 500 may be made from steel, aluminum, carbon fiber, glass, reinforced polymer, or any other material having the requisite physical characteristics. Additionally, the guard plate 500 may be rubber coated to increase the protection offered by the guard plate 500. To prevent damage to the vehicle, the guard plate 500 is connected to a pivot point, such as a hinge 502, extending transversely across the tray 362 of the second telescoping member 360 and extending in the opposite direction to the first rail 364 and the second rail 366. This allows pivotal movement of the guard plate 500 about the hinge 502 from a guard plate recessed position storing the guard plate 500 within the tray 362 when the second telescoping member 360 is in the retracted position to a guard plate protracted position extending perpendicular to the tray 362 when the second telescoping member 360 is in the extended position.

The force of gravity causes rotation of the guard plate 500 to the guard plate protracted position and retraction of the second telescoping member 360 causes the guard plate 500 to contact the second end 350 of the first telescoping member 340, thereby rotating the guard plate 500 into the guard plate recessed position. A guard plate recess 504 may be defined by a cavity extending along the tray 362 adjacent to the hinge 502 to store the guard plate 500 when the guard plate 500 is in the guard plate recessed position and the second telescoping member 360 is in the retracted position relative to the first telescoping member 340.

To transport one or more bicycles, the rack apparatus 310 of the powered bicycle presenter module 300 includes one or more bicycle holders 520 defined by a concave recess in the first rail 364 and the second rail 364 of the tray 362 of the second telescoping member 360. The bicycle holder 520 receives at least one bicycle when the second telescoping member 360 is in the extended position. It should be noted that the bicycle holder 520 may be on the first telescoping member 340, or on any telescoping member. Additionally, it should be noted that the concave recesses of the bicycle holder 520 may be lined with a rubber, a plastic, or any other elastomeric to cushion the bicycle within the bicycle holder 520. To retain the bicycle within the bicycle holder 520, a clamp 522 is disposed on the tray 362 extending parallel to the first rail 364 and the second rail 366 of the second telescoping member 360 and to secure the bicycle in the bicycle holder 520. The clamp 522 may be made of flexible steel or any other material having the desired physical characteristics. A handscrew 524 may threadably engage the clamp 522 to manually tighten and loosen the clamp 522 to the tray 362 of the second telescoping member 360. The handscrew 524 may be made of or be covered in a plastic, rubber, or other elastomeric to protect the hand of an individual utilizing the handscrew 524.

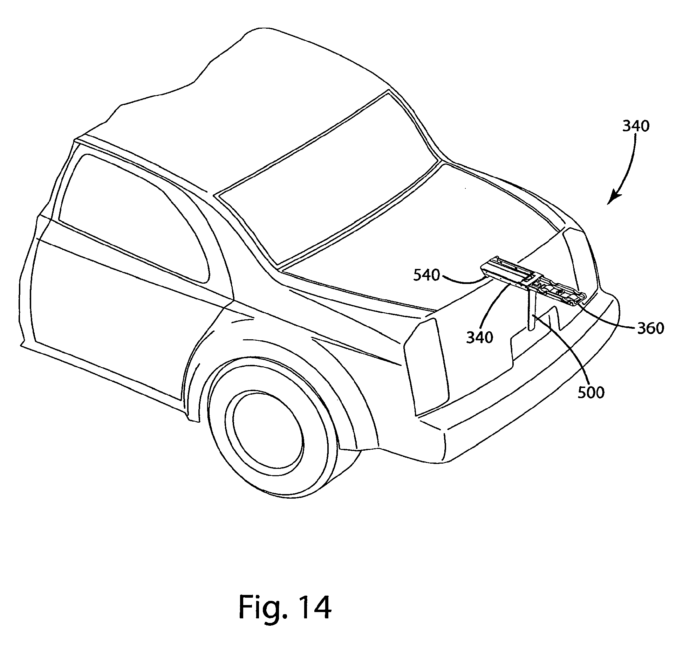

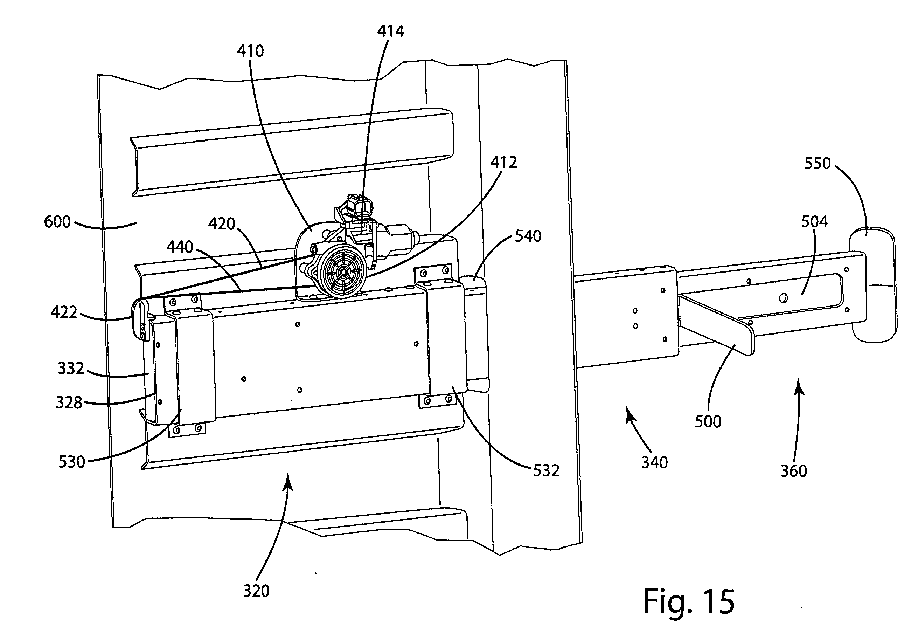

The powered bicycle presenter module 300 described above may be utilized via attachment to a vehicle, and in particular, to a trunk lid or deck lid 600 within a trunk of the vehicle. To accomplish this, and as shown in Figure 16, one or more vehicle attachment brackets may be utilized to secure the present invention. As an example, a first vehicle attachment bracket 530 may be fastened to the mounting member 320 around the first end 328 and a second vehicle attachment bracket 532 may be fastened to the mounting member 320 around the second end 330 to couple the mounting member 320 to the inside of the deck lid 600 of the vehicle. When in the retracted position, the mounting member 320 and the first telescoping member 340 and the second telescoping member 360 are totally disposed inside the vehicle trunk and hidden from view. When in the extended position, the first telescoping member 340 and the second telescoping member 360 may extend outwardly from an extension hole 540 formed through deck lid 600 to present the bicycle holder 520, as illustrated in Figure 14. A bicycle 74 (see Figure 5) can be releaseably secured to holder 520. As shown in Figure 15, a cap 550 may also be disposed on the second end 370 of the second telescoping member 360 for closing the extension hole 540 in the trunk of the vehicle. The cap 550 may be on the first telescoping member 340, or any other telescoping member. Additionally, the cap 540 may be made from a plastic, rubber, or any other elastomeric material.

It should be noted that the powered presenter module 300 of the present disclosure may be modified to operate as a mounting point for external cargo stowage or to carry other items, such as bicycles of various sizes, mopeds, scooters, skis, or snowboards. A plurality of different attachment devices may facilitate the mounting of other items not specifically detailed in the present application. Additionally, provisions may be made to permit controlled operation of the power operated drive mechanism 400 remotely by a wireless transmitter or mobile phone application. Provisions may also be made to integrate an electric outlet and/or charger cord to permit charging of battery assisted bicycles when mounted and provisions to integrate brake lights and turn signals into the second end of the telescopic member. Additionally, the present invention may be modified for use with a vehicle having a hatch instead of a trunk lid, or for a tailgate of a truck.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A powered bicycle racking system (20) for mounting to a motor vehicle (10), comprising:
a mounting structure (32);
a presenter unit (30) having a power-operated drive assembly operable to move the mounting structure (32) between a retracted position concealed within a body portion of the vehicle (10) and an extended position exposed from the body portion of the vehicle (10);
a folding bicycle attachment (22) mounted to the mounting structure (32), the folding bicycle attachment assembly (22) operable in a folded condition to be concealed by the mounting structure (32) when located in its retracted position, the folding bicycle attachment assembly (22) further operable in an unfolded condition to mount a bicycle to the mounting structure (32) when located in its extended position; and
a control module (220) for controlling actuation of the power-operated drive assembly.

2. The powered bicycle racking system (20) of claim 1 wherein the power-operated drive assembly includes a power unit and a telescopic assembly (36) interconnecting the power unit to the mounting structure (32), and wherein the control module (220) controls actuation of the power unit for causing translational movement of the telescopic assembly (36) which causes movement of the mounting structure (32) between the retracted and extended positions.

3. The powered bicycle racking system (20) of claim 2 wherein the power unit includes an electric motor, a reduction unit driven by the electric motor, and a leadscrew rotatably driven by an output member of the reduction unit, and wherein the telescopic assembly (36) has a first end in threaded engagement with the leadscrew and a second end releasably secured to the mounting structure (32) such that rotation of the leadscrew causes non-rotary translational movement of the telescopic assembly (36).

4. The powered bicycle racking system (20) of claim 3 wherein the power-operated drive assembly includes a housing (34) defining a motor chamber (106) and a telescopic chamber (110), wherein the electric motor and the reduction unit are positioned within the motor chamber (106), and wherein the leadscrew extends from the motor chamber (106) into the telescopic chamber (110), and wherein the telescopic assembly (36) is retained for non-rotary translational movement within the telescopic chamber (110).

5. The powered bicycle racking system (20) of claim 4 further including an endstop plate affixed to the telescopic assembly (36) and aligned with the telescopic chamber (110) to limit the amount of extensible travel of the telescopic assembly (36) relative to the housing.

6. The powered bicycle racking system (20) of claim 4, wherein the housing is secured within a compartment of the motor vehicle (10) (10) such that the mounting structure (32) is concealed within a bumper portion of the motor vehicle (10) in its retracted position.

7. The powered bicycle racking system (20) of claim 6 wherein the mounting structure (32) further includes a transverse flange segment configured to enclose the bicycle attachment assembly (22) in the retracted position.

8. The powered bicycle racking system (20) of claim 7 further including a bumper cover to conceal the mounting structure (32) within the bumper portion of the motor vehicle (10) when the mounting structure (32) is in the retracted position.

9. The powered bicycle racking system (20) of claim 1 further including at least one mounting bracket for securing the presenter unit (30) to the motor vehicle (10), and/or
further including at least one mounting arm on the folding bicycle attachment for engaging a bicycle on the folding bicycle attachment.

10. The powered bicycle racking system (20) of claim 1 further including at least one tire support tray for engaging a bicycle on the folding bicycle attachment.

11. The powered bicycle racking system (20) of claim 10 wherein the at least one tire support tray is pivotable about an at least one support arm for permitting movement between a folded position and an unfolded position.

12. The powered bicycle racking system (20) of claim 11 wherein the at least one support arm includes a locking cam and pin to permit pivotable movement of the at least one support tray.

13. The powered bicycle racking system (20) of claim 12 wherein the pin is a spring-loaded release pin to lock to permit the at least one tire support tray to take multiple positions on the at least one support arm.

14. The powered bicycle racking system (20) of claim 1 wherein the bicycle attachment assembly (22) is releasably secured to the mounting structure (32); or
wherein the bicycle attachment assembly (22) is releasably secured to the mounting structure (32) with the mounting structure (32) being configured to receive a secondary attachment assembly (22) to transport on the motor vehicle (10) when the bicycle attachment assembly (22) is released; or
wherein movement of the mounting structure (32) is inhibited when the control module (220) determines that the power-operated drive assembly has located the mounting structure (32) in the extended position; or
wherein movement of the mounting structure (32) is inhibited when the control module (220) determines that the power-operated drive assembly has located the mounting structure (32) in the extended position, the control module (220) further including obstacle detection logic to prevent movement of the presenter unit (30) from the fully extended to the retracted position and from the retracted to the extended position when an obstacle impedes a translational path of the presenter unit (30).
